# FASCICULE DE BREVET EUROPEEN

(11) **EP 3 077 347 B1**
(45) Date de publication et mention de la délivrance du brevet: **18.09.2019**
(21) Numéro de dépôt: 14809792.6
(22) Date de dépôt: 03.12.2014
(51) Int. Cl.: C04B 28/10, C04B 20/00, C04B 28/02

(54) **COMPOSITION DE LIANT POUR MORTIERS, BETONS ET ENDUITS LEGERS A AGREGATS VEGETAUX OU BIO-SOURCES**
BINDEMITTELZUSAMMENSETZUNG FÜR LEICHTE MÖRTEL, BETON UND BESCHICHTUNGEN MIT AGGREGATEN AUS PFLANZLICHER ODER BIOLOGISCHER QUELLE
BINDER COMPOSITION FOR LIGHT MORTARS, CONCRETES AND COATINGS WITH PLANT OR BIO-SOURCED AGGREGATES

(30) Priorité: 06.12.2013 BE 201300818
(43) Date de publication de la demande: 12.10.2016
(73) Titulaire: S.A. Lhoist Recherche et Développement, 1342 Ottignies-Louvain-la-Neuve (BE)
(72) Inventeur: PETER, Ulrike, 1050 Ixelles (BE); DAVILLER, Daniel, 25870 Chatillon-le-Duc (FR)
(74) Mandataire: Gevers Patents
(86) Numéro de dépôt international: PCT/EP2014/076347
(87) Numéro de publication internationale: WO 2015/082515

(56) Documents cités:
- EP-A1- 1 406 849
- EP-A1- 2 263 985
- EP-B2- 1 719 742
- WO-A1-2011/098814
- WO-A2-2007/000433
- BE-A4- 1 006 309
- "Fiche technique: ARGICEM Addition pouzzolanique", Argeco Developpement, octobre 2012 (2012-10), pages 1-2, XP055170459, Extrait de l'Internet: URL:http://www.argeco.fr/pdf/FT%20argicem. pdf [extrait le 2015-02-18]
- OATES J A H ED - OATES JOSEPH A H: "LIME AND LIMESTONE: CHEMISTRY AND TECHNOLOGY, PRODUCTION AND USES, PART 4: PRODUCTION OF SLAKED LIME; PART 5: USES AND SPECIFICATIONS OF LIME PRODUCTS", janvier 1998 (1998-01), LIME AND LIMESTONE: CHEMISTRY AND TECHNOLOGY, PRODUCTION AND USES, WILEY-VCH, WEINHEIM, PAGE(S) 218 - 223,258,259,267, XP002735206, ISBN: 978-3-527-29527-2 cité dans la demande page 220

## Description

La présente invention se rapporte à une composition de liant pour mortiers, bétons et enduits légers à agrégats végétaux ou bio-sourcés, plus particulièrement pour béton de chanvre, comprenant un premier composant minéral conventionnel et de la chaux éteinte pulvérulente.

Par le terme « mortier », on entend au sens de la présente invention un mélange d'un ou plusieurs liants minéraux comme la chaux, un ciment ou analogue, éventuellement associé(s) à un ou plusieurs liants organiques, et d'agrégat(s). Dans le cas d'un mortier « léger » à agrégats végétaux ou bio-sourcés, les agrégats sont du type chanvre, bois ou analogues. Un tel mortier est utilisé en construction pour lier et/ou pour recouvrir les éléments de construction et peut également contenir des fillers, des additifs et/ou des adjuvants.

Par le terme « enduit », on entend une composition de mortier destinée à être appliquée en couche en une ou plusieurs passes. Un enduit est donc un mortier à application de surface à l'extérieur (« render » en anglais) ou à l'intérieur (« plaster » en anglais).

Par les termes « béton léger» au sens de la présente invention, on entend principalement un mortier léger, utilisé en application volumique (blocs, banchage...).

Les liants utilisés dans les mortiers, bétons et enduits en général, et à base d'agrégat végétaux ou bio-sourcés en particulier, sont couramment le plâtre, la chaux aérienne, la chaux formulée ou la chaux hydraulique, les ciments et autres liants hydrauliques et pouzzolaniques comme du méta-kaolin, des laitiers de haut-fourneau ou des cendres volantes (voir par exemple WO2011/098814).

Les mortiers, bétons et enduits légers à agrégats végétaux ou bio-sourcés sont déjà bien connus de l'homme de métier. A titre d'exemple, on peut citer le document EP1406849 qui décrit des compositions pour le secteur technique des bétons et mortiers dits de chanvre c'est-à-dire contenant de l'ana de chanvre ou chènevotte défibrée ou non et/ou d'autres composants du chanvre, comme les fibres, fibrilles, poussières, poudres de chanvre.

EP2263985 décrit des compositions pour matériaux composites de construction contenant des granulats de chènevotte de chanvre et un liant à base de chaux et de métakaolin.

Ces produits de construction à base de chanvre ou de bois présentent un avantage majeur en termes d'isolation thermique et acoustique ainsi qu'en termes de résistance mécanique notamment en matière de résistance à la compression et de retour en élasticité, ce qui en fait de très bons produits adaptés aux normes sismiques.

Toutefois, ces compositions de bétons et mortiers posent un problème très sérieux du fait du caractère fortement hydrophile de l'agrégat végétal ou bio-sourcé. En effet, celui-ci étant capable d'absorber une très grande quantité d'eau, jusqu'à environ 400 % de son poids (d'eau ou de liquide à base aqueuse), il a souvent tendance à absorber l'eau contenue dans le mortier ou béton et nécessaire à la solidification de ces systèmes, notamment lorsque le liant utilisé est à prise hydraulique. Ces bétons et mortiers nécessitent dès lors souvent l'utilisation de quantité d'eau plus importante et/ou présentent des caractéristiques de séchage, de prise, et de propriétés mécaniques aléatoires.

Selon le document EP 1406849, les inconvénients de ces bétons et mortiers de chanvre ont été partiellement solutionnés par l'utilisation d'un liant particulier constitué, en totalité ou en partie, de chaux aérienne éventuellement en combinaisons diverses de types et de formes de chaux et comportant au moins un adjuvant de formation de pores et capillaires très fins et au moins un adjuvant d'hydrophobation matricielle.

Cependant, les mortiers/bétons de chanvre ainsi obtenus présentent toujours de graves défauts, tels que le défaut de séchage et autres défauts analogues (défaut de prise, farinage,..), qu'une grande partie de l'industrie considérée, malgré tous ses efforts, n'est pas parvenue à surmonter et s'est donc vue forcée de s'en accommoder.

Par ailleurs, les bétons à base d'agrégats végétaux ou bio-sourcés souffrent d'une instabilité des performances applicatives, liée aux interactions indésirables du liant minéral avec les extractibles et produits de dégradation de l'agrégat organique, ayant notamment pour conséquence de retarder, voire d'inhiber, la prise du liant minéral conventionnellement utilisé.

Ces interactions varient avec la composition chimique et les propriétés physico-chimiques de l'agrégat végétal, qui dépendent de la variété, la provenance, les conditions climatiques, la culture et la transformation de la plante, donc de facteurs variables et imprévisibles.

La présente invention vise à résoudre les problèmes précités, en particulier à inhiber les interactions indésirables des liants minéraux, conventionnellement utilisés dans les mortiers, bétons et enduits légers à agrégats végétaux ou bio-sourcés, avec les extractibles et produits de dégradation de l'agrégat organique.

Pour résoudre ce problème, il est prévu suivant l'invention une composition de liant telle qu'indiquée au début présentant une surface spécifique calculée selon la méthode BET supérieure à 10 m²/g, de préférence supérieure à 12 m²/g, en particulier supérieure à 14 m²/g, caractérisée en ce que ladite chaux éteinte pulvérulente présente une surface spécifique calculée selon la méthode BET supérieure à 22 m²/g, de préférence supérieure à 25 m²/g et un volume poreux total calculé selon la méthode BJH de désorption d'azote supérieur ou égal à 0,08 cm³/g, de manière préférentielle supérieure ou égal à 0,1 cm³/g et est présente en une quantité strictement supérieure à 20 % en poids, en particulier égale ou supérieure à 25% en poids, de préférence égale ou supérieure à 30 % en poids, avantageusement égale ou supérieure à 40% en poids et égale ou inférieure à 80 % en poids, en particulier égale ou inférieure à 60 % en poids, par rapport au poids total de ladite composition de liant et en ce que ledit premier composant minéral conventionnel est un composant liant choisi dans le groupe constitué des ciments, de la chaux hydraulique naturelle ou artificielle, des argiles, des liants à maçonner, des liants à prise pouzzolanique et hydraulique, du plâtre et de leurs mélanges.

La surface spécifique selon la présente invention est mesurée par manométrie d'adsorption d'azote et calculée selon la méthode BET, après dégazage sous vide à 190°C pendant au moins 2 heures.

Il est important de ne pas confondre surface spécifique BET, mesurée par adsorption ou désorption d'azote après dégazage, et surface spécifique Blaine, mesurée par perméabilité à l'air. En effet, la méthode BET permet de déterminer la totalité de la surface spécifique d'un composé, en tenant notamment compte de sa porosité, et n'est pas directement dépendante de la taille des particules constitutives, tandis que la méthode Blaine permet de déterminer uniquement la surface externe des particules de ce composé et dépend directement de la taille de celles-ci. (Allan T., Particle Size Measurement, Vol. 2, Surface area and pore size determination, cinquième édition, 1997, page 11, page 39).

Pour obtenir une telle surface spécifique de la composition de liant selon la présente invention, il est avantageusement prévu d'utiliser de la chaux éteinte pulvérulente présentant une surface spécifique calculée selon la méthode BET supérieure à 22 m²/g, de préférence supérieure à 25 m²/g.

Selon la présente invention, la composition de liant peut en outre comprendre un composant additionnel apportant aussi de la surface spécifique comme par exemple des argiles colloïdales, en particulier des kaolinites, de la bentonite ou des wollastonites, des zéolites et des silices ultra-fines et leurs mélanges.

L'augmentation de la surface spécifique de la composition de liant selon la présente invention présente un avantage majeur résidant dans son interaction avec les molécules organiques, provenant aussi bien des additifs typiquement utilisés dans les liants et mortiers que des extractibles et produits de dégradation des bois et fibres végétales. S'il est souhaité que les additifs organiques puissent garder leur action sur le système mortier, enduit ou béton à base d'agrégats végétaux ou bio-sourcés, les produits d'extraction ou de décomposition du matériau végétal ou bio-sourcé sont quant à eux plutôt néfastes pour ledit système. Il est donc avantageux de pouvoir inhiber les effets de ces derniers.

La chaux éteinte est constituée d'un ensemble de particules solides, principalement de di-hydroxyde de calcium de formule Ca(OH)₂, et est le résultat industriel de l'extinction d'une chaux vive avec de l'eau, réaction également appelée hydratation. Ce produit est également connu sous le nom de chaux hydratée ou chaux aérienne et présente typiquement des surfaces spécifiques BET inférieures à 20 m²/g (J.A.H. Oates, Lime and Limestone-Chemistry and Technology, Production and Uses, 1998, p. 220).

Cette chaux éteinte ou hydratée (« slaked lime » or « hydrated lime» en anglais) ou aérienne (« air lime» en anglais) ou hydroxyde de calcium peut évidemment contenir des impuretés, à savoir des phases dérivées de SiO₂, Al₂O₃, Fe₂O₃, MnO, P₂O₅, K₂O et/ou SO₃, représentant globalement quelques dizaines de grammes par kilogramme. Néanmoins, la somme de ces impuretés, exprimées sous la forme des oxydes précités, ne dépasse pas 5 % en masse, de préférence 3 %, de préférence 2 % ou même 1 % de la masse de la chaux éteinte selon l'invention. En particulier, la chaux éteinte contient avantageusement moins de 1,5 % en masse de Fe₂O₃, de préférence moins de 1 % et de préférence moins de 0,5%.

Cette chaux éteinte peut encore contenir de l'oxyde ou de l'hydroxyde de magnésium. Suivant les teneurs en ces composés, on parlera de chaux magnésienne, dolomitique ou de dolomie, partiellement ou totalement éteinte.

Cette chaux éteinte peut aussi contenir de l'oxyde de calcium qui n'aurait pas été hydraté au cours de l'extinction, tout comme elle peut contenir du carbonate de calcium CaCO₃ ou de magnésium MgCO₃. Ces carbonates peuvent provenir soit du calcaire initial (ou de la dolomie crue) dont est dérivée la chaux éteinte selon l'invention (incuits), soit d'une réaction de carbonatation partielle de la chaux éteinte au contact de l'air. La teneur en oxyde de calcium dans la chaux éteinte dans le cadre de la présente l'invention est généralement inférieure à 3 % en masse, de préférence inférieure à 2 % et de manière avantageuse inférieure à 1 %. Celle en carbonates est inférieure à 20 % en masse, en particulier inférieure à 10% en masse, de préférence inférieure à 6 % et de manière avantageuse inférieure à 4 %, de manière encore plus avantageuse inférieure à 3%.

Selon la présente invention, la sélection de chaux éteinte pulvérulente à haute surface spécifique, c'est-à-dire supérieure ou égale à 22 m²/g, de préférence supérieure à 25 m²/g, dans ladite composition de liant selon l'invention en ayant recours à une chaux éteinte pulvérulente à haute surface spécifique ou éventuellement en ajoutant un composant de type argile colloïdale, en particulier des kaolinites, de la bentonite ou des wollastonites ou des zéolites à surface spécifique élevée ou encore des silices ultrafines et leurs mélanges, a permis, de manière surprenante, de réduire l'impact néfaste des produits d'extraction ou de décomposition du matériau végétal ou bio-sourcé sans altérer le fonctionnement global du mortier, béton ou enduit léger résultant, en particulier en préservant l'action des additifs organiques susdits dans ledit système. Ce phénomène est d'autant moins prévisible que si ces molécules organiques sont adsorbées sur la chaux éteinte pulvérulente, rien ne laisse présager que l'action des additifs organiques et/ou l'action de la chaux éteinte pulvérulente seront préservées.

La présence de chaux éteinte pulvérulente à haute surface spécifique dans la composition de liant suivant l'invention permet, lors de l'utilisation de la composition de liant dans un mortier, enduit ou béton à base d'agrégats végétaux ou bio-sourcés de réduire, voire de supprimer l'inhibition de la prise hydraulique du premier composant minéral (en particulier un premier liant minéral conventionnel), prise qui est dès lors moins retardée. De plus, la prise aérienne du mortier, enduit ou béton à base d'agrégats végétaux ou bio-sourcés est favorisée. Ceci conduit à un mortier, enduit ou béton plus résistant. En outre, une diminution de la quantité de liant (et par conséquent du coût du mortier, enduit ou béton à base d'agrégats végétaux ou bio-sourcés) peut alors être envisagée à iso-performances. De même, le phénomène de farinage est diminué voir annihilé.

Avantageusement, la chaux éteinte pulvérulente présente une surface spécifique calculée selon la méthode BET supérieure à 27 m²/g de préférence supérieure à 30 m²/g, de manière préférentielle, supérieure à 32 m²/g et en particulier supérieure à 35 m²/g.

Le premier composant minéral conventionnel est un composant liant choisi dans le groupe constitué des ciments, de la chaux hydraulique naturelle ou artificielle, des argiles, des liants à maçonner, des liants à prise pouzzolanique et hydraulique, du plâtre et de leurs mélanges.

De préférence, lesdits ciments sont choisis dans le groupe des ciments courants, en particulier normalisés, par exemple gris ou blanc, des ciments réfractaires, alumineux fondus, prompts, des ciments portland, des laitiers de hauts-fourneaux, des cendres volantes et de leurs mélanges.

De manière plus particulière, la chaux éteinte pulvérulente présente des particules présentant un d₃ supérieur à 0,1 µm, en particulier supérieur à 0,5 µm et un d₉₈ inférieur ou égal à 200 µm, en particulier inférieur ou égal à 150 µm, mesurés par granulométrie laser dans du méthanol.

La notation d_{X} représente un diamètre, exprimé en µm, par rapport auquel X % des particules ou grains mesurées sont plus petites.

Dans une forme de réalisation particulière selon la présente invention, la chaux éteinte pulvérulente présente des particules présentant un d₉₈ inférieur ou égal à 90 µm, tout particulièrement inférieur ou égal à 63 µm, mesurés par granulométrie dans du méthanol.

La chaux éteinte pulvérulente présente un volume poreux total calculé selon la méthode BJH de désorption d'azote supérieur ou égal à 0,08 cm³/g, de manière préférentielle supérieur ou égal à 0,1 cm³/g.

Dans une forme de réalisation particulière selon la présente invention, la chaux éteinte pulvérulente présente un volume poreux total calculé selon la méthode BJH de désorption d'azote supérieur ou égal à 0,12 cm³/g, de préférence supérieur ou égal à 0,15 cm³/g et de manière particulière supérieur à 0,18 cm³/g.

Par « volume poreux total » au sens de la présente invention, on entend le volume total des pores dont la taille est comprise entre 17 et 1000 Å (1,7 et 100 nm), mesuré par manométrie d'adsorption d'azote et calculé selon la méthode BJH, après dégazage sous vide à 190°C pendant au moins 2 heures.

En particulier, la chaux éteinte pulvérulente présente une densité en vrac mesurée selon la norme EN 459-2 allant de 250 à 500 kg/m³.

De manière préférentielle, la composition selon la présente invention comprend en outre un entraîneur d'air tel qu'un surfactant ou tensioactif, en particulier choisi dans le groupe des sulfates et sulfonates d'alkyle, des alcools gras éthoxylés, des copolymères à blocs et de leurs mélanges.

Dans une variante selon l'invention, la composition de liant peut comprendre en outre un ou plusieurs agent de rétention d'eau, par exemple des éthers cellulosiques ou des gommes de guar, leurs dérivés et leurs mélanges.

Dans encore une autre variante selon la présente invention, la composition de liant comprend en outre un modificateur de rhéologie, en particulier choisi dans le groupe des hydrocolloïdes, plus particulièrement dans le groupe des polysaccharides, des dérivés d'amidon, des alginates, des gommes de guar et de leurs dérivés, des gommes de xanthane et de leur dérivés, des gommes de caraghenane et de leurs dérivés, des succinoglycanes, des superplastifiants comme des polycarboxylates et des mélamines formaldéhydes, des colloïdes minéraux, en particulier la silice et les argiles, et leurs mélanges.

Avantageusement, la composition selon l'invention comprend également un agent hydrophobant choisi dans le groupe des sels d'acides gras comme les stéarates et les oléates, des huiles végétales et minérales, des silanes, des siloxanes et de leurs mélanges.

Dans une variante particulière, la composition selon la présente invention comprend en outre un liant organique choisi dans le groupe des latex industriels comme par exemple des latex à base de copolymères d'acétate de polyvinyle/éthylène, d'acétate de polyvinyle/versatate, de styrol / butadiène.

D'autres formes de réalisation de la composition de liant pour mortiers, bétons et enduits légers à agrégats végétaux ou bio-sourcés, plus particulièrement pour béton de chanvre suivant l'invention sont indiquées dans les revendications annexées.

L'invention se rapporte également à une utilisation d'une composition de liant selon la présente invention, dans un mortier contenant des agrégats végétaux ou bio-sourcés comme le bois ou le chanvre.

L'invention se rapporte également à une utilisation d'une composition de liant selon la présente invention dans un enduit léger contenant des agrégats végétaux ou bio-sourcés comme le bois ou le chanvre.

La présente invention se rapporte également à une utilisation de ladite composition de liant selon l'invention dans un béton contenant des agrégats végétaux ou bio-sourcés comme le bois ou le chanvre.

Avantageusement, lesdits agrégats végétaux ou bio-sourcés ont une forme de pailles de longueur de 5 à 50 mm et de largeur inférieure à 10 mm.

D'autres formes d'utilisation de la composition selon l'invention sont mentionnées dans les revendications annexées.

D'autres caractéristiques, détails et avantages de l'invention ressortiront de la description donnée ci-après, à titre non limitatif et en faisant référence aux exemples.

### Exemples.-

### Exemple 1.-

Une composition de liant pour béton de chanvre selon l'invention est composée (en masse) de 42 % de diverses chaux éteintes (chaux aérienne standard STD, chaux éteinte de plus grande surface spécifique HS ou chaux éteinte de plus faible surface spécifique BS) selon le tableau 1 ci-dessous, 42% de ciment Portland CEM I 52,5 comme premier composant minéral conventionnel, et de 16% de filler calcaire <300 µm. Des additifs organiques habituellement utilisés dans les mortiers (entraineurs d'air, rétenteurs d'eau, additifs rhéologiques, hydrophobants) sont en outre ajoutés dans une proportion en poids de 0 à 2% par rapport au poids total de ladite composition de liant. Notamment, la composition de liant comprend 0,2 % en poids d'entraineur d'air. La granulométrie des chaux éteintes est mesurée à l'aide d'un granulomètre laser dans du méthanol.

**Tableau 1.-**

| Chaux éteinte pulvérulente | Surface BET (m²/g) de la chaux éteinte pulvérulente | Surface BET (m²/g) de la composition de liant | d₃ (µm) | d₁₀ (µm) | d₂₅ (µm) | d₅₀ (µm) | d₇₅ (µm) | d₉₀ (µm) | d₉₇ (µm) |
|---|---|---|---|---|---|---|---|---|---|
| Chaux BS3 | 6,7 | 3,6 | 0,8 | 1,4 | 3,3 | 11,7 | 38,3 | 75,5 | 132,0 |
| Chaux STD4 | 14,6 | 6,9 | 0,7 | 1,2 | 2,0 | 3,6 | 6,2 | 9,8 | 34,9 |
| Chaux HS2 | 35,8 | 15,8 | 0,8 | 1,2 | 2,0 | 4,2 | 10,0 | 27,3 | 50,7 |
| Chaux HS3 | 31,7 | 14,1 | 0,8 | 1,3 | 2,1 | 3,8 | 6,7 | 12,8 | 36,2 |

Un béton de chanvre est alors préparé en utilisant 9,6 kg de ces liants formulés, avec 4,15 kg de chènevotte de chanvre 1, de qualité commerciale. Le taux d'eau (Eau/Solide, E/S) est ajusté afin d'obtenir une même consistance du béton frais. Des échantillons en forme cylindrique (h=22 cm, d=11cm) sont alors préparés dans des éprouvettes. Plus précisément, des couches de béton, compressées chacune à une pression d'environ 0,006 MPa, sont successivement empilées les unes sur les autres dans lesdites éprouvettes. Après leur préparation, les éprouvettes sont stockées en chambre climatique à 20°C et 65% d'humidité.

Des essais de compression uniaxiale entre 2 plateaux parallèles (déplacement de 5mm/min) ont été réalisés sur ces échantillons après 14 et 28 jours de stockage, suivis par 3 jours de séchage à 40 °C. Les résistances à la compression (Rc) sont mentionnées au tableau 2 (moyennes sur 6 mesures).

**Tableau 2.-**

| Béton à base de | E/S (%) | Rc 14 j (MPa) | Rc 28 j (MPa) |
|---|---|---|---|
| Chaux BS3 | 76 | 0,03 ± 0,01 | 0,03 ± 0,01 |
| Chaux STD4 | 79 | 0,10 ± 0,01 | 0,20 ± 0,01 |
| Chaux HS2 | 81 | 0,28 ± 0,01 | 0,27 ± 0,01 |
| Chaux HS3 | 84 | 0,28 ± 0,01 | 0,29 ± 0,01 |

Comme on peut le constater, les bétons à base des chaux HS2 et HS3 présentent une résistance mécanique augmentée, due à la surface spécifique élevée de la chaux éteinte pulvérulente dans la composition de liant selon l'invention, ainsi qu'un développement de la résistance à la compression plus rapide.

### Exemple 2.-

Une composition de liant pour béton de chanvre selon l'invention est composée (en masse) de 42 % de diverses chaux éteintes (chaux aérienne standard STD, chaux éteinte de plus grande surface spécifique HS ou chaux éteinte de plus faible surface spécifique BS) selon le tableau 3 ci-dessous, 42% de ciment Portland CEM I 52,5 comme premier composant minéral conventionnel, et de 16% de filler calcaire <300 µm. Des additifs organiques habituellement utilisés dans les mortiers (entraineurs d'air, rétenteurs d'eau, additifs rhéologiques, hydrophobants) sont en outre ajoutés dans une proportion en poids de 0 à 2% par rapport au poids total de ladite composition de liant. La granulométrie des chaux éteintes est mesurée à l'aide d'un granulomètre laser dans du méthanol.

**Tableau 3.-**

| Chaux éteinte pulvérulente | Surface BET (m²/g) de la chaux éteinte pulvérulente | d₃ (µm) | d₁₀ (µm) | d₂₅ (µm) | d₅₀ (µm) | d₇₅ (µm) | d₉₀ (µm) | d₉₇ (µm) |
|---|---|---|---|---|---|---|---|---|
| Chaux BS4 | 6,9 | 1,1 | 3,1 | 13,5 | 54,2 | 102,8 | 156,7 | 225,3 |
| Chaux STD5 | 13,5 | 0,7 | 1,3 | 2,5 | 5,0 | 8,3 | 12,9 | 32,2 |
| Chaux HS4 | 39,6 | 0,9 | 1,3 | 2,2 | 4,3 | 9,7 | 27,5 | 51,3 |

Un béton de chanvre est préparé en utilisant, en proportions massiques, 9,3 kg des liants formulés, avec 4,15 kg de chènevotte de chanvre 2, de qualité commerciale, cette deuxième chènevotte de chanvre étant connue pour induire un farinage du béton standard sur chantier. Des échantillons en forme cylindrique du béton ainsi formé sont préparés comme à l'exemple 1.

Des essais de compression (déplacement de 5mm/min) ont été réalisés après 28 jours de stockage, suivis par 3 jours de séchage à 40 °C. Les résistances à la compression (Rc) sont mentionnées au tableau 4.

**Tableau 4.-**

| Béton à base de | E/S (%) | Rc 28 j (MPa) |
|---|---|---|
| Chaux BS4 | 77 | 0,01 ± 0,01 |
| Chaux STD5 | 77 | 0,01 ± 0,01 |
| Chaux HS4 | 81 | 0,21 ± 0,01 |

Dans les bétons à base de chaux standard (chaux STD5) et de chaux à basse surface spécifique (BS4), tous les échantillons préparés n'ont pas pu être testés car certains se sont brisés lors de leur démoulage.

Dans les éprouvettes à base de liant avec la chaux standard et la chaux à basse surface spécifique, on observe. également une couche d'apparence jaune/brunâtre (« croûte ») typiquement observée dans des échantillons de béton de chanvre fariné.

De plus, dans ces deux bétons, des résistances à la compression très faibles ont été constatées.

Seul le liant à base de chaux éteinte pulvérulente à haute surface spécifique (HS4) permet d'atteindre un niveau significatif de résistance mécanique.

### Exemple 3.-

Une composition de liant pour béton de chanvre selon l'invention est composée (en masse) de 42% de chaux éteinte pulvérulente, standard STD ou à haute surface spécifique HS, combinée respectivement avec de la bentonite et de l'Aérosil 200, selon le tableau 5 ci-dessous, 42% de ciment Portland CEM 152,5 comme premier composant minéral, et de 16% de filler calcaire <300 µm. Des additifs organiques habituellement utilisés dans les mortiers (entraineurs d'air, rétenteurs d'eau, additifs rhéologiques, hydrophobants) sont en outre ajoutés dans une proportion en poids de 0 à 2% par rapport au poids de ladite composition de liant.

**Tableau 5.-**

| | Chaux STD6 (%) | Chaux HS5 (%) | Bentonite (%) | Aérosil 200 (%) | Surface BET de l'échantillon à base de chaux éteinte pulvérulente (m²/g) | Vol. poreux BJH de l'échantillon à base de chaux éteinte pulvérulente (cm³/g) | Surface BET de la composition de liant (m²/g) | Vol. poreux BJH de la composition de liant (cm³/g) |
|---|---|---|---|---|---|---|---|---|
| Echantillon 1 | 100 | | | | 12,6 | 0,06 | 5,6 | 0,03 |
| Echantillon 2 | | 100 | | | 43,8 | 0,20 | 18,1 | 0,09 |
| Echantillon 3 | 50 | | 50 | | 44,2 | 0,08 | 12,2 | 0,04 |
| Echantillon 4 | 84 | | | 16 | 44,0 | 0,16 | 15,5 | 0,06 |

Un béton de chanvre est alors préparé en utilisant, en proportions massiques, 6,7 kg de ces liants formulés, avec 3,0 kg de chènevotte de chanvre 2, connue pour induire un farinage du béton standard sur chantier (voir exemple 2). Des échantillons en forme cylindrique du béton ainsi formé sont préparés comme aux exemples 1 et 2.

Des essais de compression (déplacement de 5mm/min) ont été réalisés sur ces échantillons après 14 et 28 jours de stockage, suivis ici par 7 jours de séchage à 40 °C. Les résistances à la compression (Rc) sont mentionnées au tableau 6.

**Tableau 6.-**

| Béton à base de | E/S (%) | R_{C} 14 j (MPa) | R_{C} 28 j (MPa) |
|---|---|---|---|
| Echantillon 1 | 73,0 | 0,01 ± 0,01 | 0,01 ± 0,01 |
| Echantillon 2 | 76,1 | 0,31 ± 0,05 | 0,30 ± 0,02 |
| Echantillon 3 | 72,0 | 0,06 ± 0,01 | 0,09 ± 0,01 |
| Echantillon 4 | 70,0 | 0,18 ± 0,02 | 0.19 ± 0.02 |

Dans les bétons à base de chaux standard (chaux STD6), tous les échantillons préparés n'ont pas pu être testés car certains se sont brisés lors de leur démoulage. Dans ces éprouvettes, des résistances à la compression très faibles ont été constatées.

Les compositions de liants à base de chaux éteinte pulvérulente de haute surface spécifique permettent d'atteindre un niveau significatif de résistance mécanique.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Composition de liant pour mortiers, bétons et enduits légers à agrégats végétaux ou bio-sourcés, plus particulièrement pour béton de chanvre, comprenant un premier composant minéral conventionnel et de la chaux éteinte pulvérulente, ladite composition de liant présentant une surface spécifique calculée selon la méthode BET supérieure à 10 m²/g, de préférence supérieure à 12 m²/g, en particulier supérieure à 14 m²/g, **caractérisée en ce que** ladite chaux éteinte pulvérulente présente une surface spécifique calculée selon la méthode BET supérieure à 22 m²/g, de préférence supérieure à 25 m²/g et un volume poreux total calculé selon la méthode BJH de désorption d'azote supérieur ou égal à 0,08 cm³/g, de manière préférentielle supérieure ou égal à 0,1 cm³/g et est présente en une quantité strictement supérieure à 20 % en poids, en particulier égale ou supérieure à 25% en poids, de préférence égale ou supérieure à 30 % en poids, avantageusement égale ou supérieure à 40% en poids et égale ou inférieure à 80 % en poids, en particulier égale ou inférieure à 60 % en poids, par rapport au poids total de ladite composition de liant et **en ce que** ledit premier composant minéral conventionnel est un composant liant choisi dans le groupe constitué des ciments, de la chaux hydraulique naturelle ou artificielle, des argiles, des liants à maçonner, des liants à prise pouzzolanique et hydraulique, du plâtre et de leurs mélanges.

2. Composition de liant selon la revendication 1, dans laquelle la chaux éteinte pulvérulente présente une surface spécifique calculée selon la méthode BET supérieure à 27 m²/g, de préférence supérieure à 30 m²/g, de manière préférentielle supérieure à 32 m²/g et en particulier supérieure à 35 m²/g.

3. Composition de liant selon la revendication 1 ou la revendication 2, dans laquelle lesdits ciments sont choisis dans le groupe des ciments courants, en particulier normalisés, des ciments réfractaires, alumineux fondus, prompts, des ciments portland, des laitiers de hauts-fourneaux, des cendres volantes et de leurs mélanges.

4. Composition de liant selon l'une quelconque des revendications 1 à 3, dans laquelle la chaux éteinte pulvérulente présente des particules présentant un d₃ supérieur à 0,1 µm, en particulier supérieur à 0,5 µm et un d₉₈ inférieur ou égal à 200 µm, en particulier inférieur ou égal à 150 µm.

5. Composition de liant selon l'une quelconque des revendications 1 à 4, dans laquelle la chaux éteinte pulvérulente présente des particules présentant un d₉₈ inférieur ou égal à 90 µm, tout particulièrement inférieur ou égal à 63 µm.

6. Composition de liant selon l'une quelconque des revendications 1 à 5, dans laquelle la chaux éteinte pulvérulente présente un volume poreux total calculé selon la méthode BJH de désorption d'azote supérieur ou égal à 0,12 cm³/g, de préférence supérieur ou égal à 0,15 cm³/g et de manière particulière supérieur à 0,18 cm³/g.

7. Composition de liant selon l'une quelconque des revendications 1 à 6, dans laquelle la chaux éteinte pulvérulente présente une densité en vrac mesurée selon la norme EN 459-2 allant de 250 à 500 kg/m³.

8. Composition de liant selon l'une quelconque des revendications 1 à 7, comprenant en outre un entraîneur d'air tel qu'un surfactant ou tensioactif, en particulier choisi dans le groupe des sulfates ou sulfonates d'alkyle, des alcools gras éthoxylés, des copolymères à blocs et de leurs mélanges.

9. Composition de liant selon l'une quelconque des revendications 1 à 8, comprenant en outre un ou plusieurs agent de rétention d'eau, par exemple des éthers cellulosiques ou des gommes de guar, leurs dérivés et leurs mélanges.

10. Composition de liant selon l'une quelconque des revendications 1 à 9, comprenant en outre un modificateur de rhéologie, en particulier choisi dans le groupe des hydrocolloïdes, plus particulièrement dans le groupe des polysaccharides, des dérivés d'amidon, des alginates, des gommes de guar et de leurs dérivés, des gommes de xanthane et de leur dérivés, des gommes de caraghenane et de leurs dérivés, des succinoglycanes, des superplastifiants comme des polycarboxylates ou des mélamines formaldéhydes, des colloïdes minéraux, en particulier la silice et les argiles, et leurs mélanges.

11. Composition selon l'une quelconque des revendications 1 à 10, comprenant en outre un agent hydrophobant choisi dans le groupe des sels d'acides gras comme les stéarates et les oléates, des huiles végétales et minérales, des silanes, des siloxanes et de leurs mélanges.

12. Composition selon l'une quelconque des revendications 1 à 11, comprenant en outre un liant organique choisi dans le groupe des latex industriels comme par exemple des latex à base de copolymères d'acétate de polyvinyle/éthylène, d'acétate de polyvinyle/versatate, de styrol / butadiène.

13. Utilisation d'une composition de liant selon l'une quelconque des revendications 1 à 12, dans un enduit léger contenant des agrégats végétaux ou bio-sourcés comme le bois ou le chanvre.

14. Utilisation d'une composition de liant selon l'une quelconque des revendications 1 à 12, dans un mortier contenant des agrégats végétaux ou bio-sourcés comme le bois ou le chanvre.

15. Utilisation d'une composition de liant selon l'une quelconque des revendications 1 à 12, dans un béton contenant des agrégats végétaux ou bio-sourcés comme le bois ou le chanvre.

16. Utilisation selon les revendications 13 à 15, dans laquelle lesdits agrégats végétaux ou bio-sourcés ont une forme de pailles de longueur de 5 à 50 mm et de largeur inférieure à 10 mm.

## Patentansprüche

1. Bindemittelzusammensetzung für Mörtel, Betons und leichte Beschichtungen mit Aggregaten aus pflanzlicher oder biologischer Quelle, insbesondere für Hanfbeton, umfassend einen ersten herkömmlichen mineralischen Bestandteil und pulverförmigen gelöschten Kalk, wobei die Bindemittelzusammensetzung eine nach dem BET-Verfahren berechnete spezifische Oberfläche von mehr als 10 m²/g, vorzugsweise von mehr als 12 m²/g und insbesondere von mehr als 14 m²/g aufweist, **dadurch gekennzeichnet, dass** der pulverförmige gelöschte Kalk eine nach dem BET-Verfahren berechnete spezifische Oberfläche von mehr als 22 m²/g, vorzugsweise von mehr als 25 m²/g und ein nach dem BJH-Stickstoffdesorptionsverfahren berechnetes Gesamtporenvolumen von mehr als oder gleich 0,08 cm³/g, auf bevorzugte Weise von mehr als oder gleich 0,1 cm³/g, aufweist, und in einer Menge von streng über 20 Gew.-% vorliegt, insbesondere gleich oder mehr als 25 Gewichts-%, vorzugsweise gleich oder mehr als 30 Gewichts-%, vorteilhafterweise gleich oder mehr als 40 Gewichts-% und gleich oder weniger als 80 Gewichts-%, insbesondere gleich oder weniger als 60 Gewichts-% bezogen auf das Gesamtgewicht der Bindemittelzusammensetzung, und dadurch, dass der erste herkömmliche mineralische Bestandteil ein Bindemittelbestandteil ist, ausgewählt aus der Gruppe bestehend aus Zementen, natürlichem oder künstlichem hydraulischem Kalk, Tonerden, Bindemitteln zum Mauern, Bindemitteln zum puzzolanischen und hydraulischen Abbinden, Gips und deren Gemischen.

2. Bindemittelzusammensetzung nach Anspruch 1, wobei der pulverförmige gelöschte Kalk eine nach dem BET-Verfahren berechnete spezifische Oberfläche von mehr als 27 m²/g, vorzugsweise mehr als 30 m²/g, auf bevorzugte Weise von mehr als 32 m²/g und besonders von mehr als 35 m²/g aufweist.

3. Bindemittelzusammensetzung nach Anspruch 1 oder Anspruch 2, wobei die Zemente ausgewählt sind aus der Gruppe von geläufigen, insbesondere normalisierten Zementen, feuerfesten Zementen, Tonerdeschmelz-, Schnell-, Portlandzementen, Hochofenschlacken, Flugaschen und deren Gemischen.

4. Bindemittelzusammensetzung nach einem der Ansprüche 1 bis 3, wobei der pulverförmige gelöschte Kalk Partikel aufweist, die einen d₃ von mehr als 0,1 µm, insbesondere von mehr als 0,5 µm und einen d₉₈ von weniger als oder gleich 200 µm, insbesondere von weniger als oder gleich 150 µm aufweisen.

5. Bindemittelzusammensetzung nach einem der Ansprüche 1 bis 4, wobei der pulverförmige gelöschte Kalk Partikel aufweist, die einen d₉₈ von weniger als oder gleich 90 µm, ganz besonders von weniger als oder gleich 63 µm aufweisen.

6. Bindemittelzusammensetzung nach einem der Ansprüche 1 bis 5, wobei der pulverförmige gelöschte Kalk ein nach dem BJH-Stickstoffdesorptionsverfahren berechnetes Gesamtporenvolumen von mehr als oder gleich 0,12 cm³/g, vorzugsweise von mehr als oder gleich 0,15 cm³/g und auf besondere Weise von mehr als 0,18 cm³/g aufweist.

7. Bindemittelzusammensetzung nach einem der Ansprüche 1 bis 6, wobei der pulverförmige gelöschte Kalk eine Dichte in loser Schüttung gemessen nach der Norm EN 459-2 aufweist, die von 250 bis 500 kg/m³ reicht.

8. Bindemittelzusammensetzung nach einem der Ansprüche 1 bis 7, ferner umfassend einen Luftporenbildner wie ein Tensid oder oberflächenaktives Mittel, insbesondere ausgewählt aus der Gruppe von Alkylsulfaten oder - sulfonaten, ethoxylierten Fettalkoholen, Blockcopolymeren und deren Gemischen.

9. Bindemittelzusammensetzung nach einem der Ansprüche 1 bis 8, ferner umfassend ein oder mehrere Wasserretentionsmittel, zum Beispiel Celluloseether oder Guargummis, deren Derivate und deren Gemische.

10. Bindemittelzusammensetzung nach einem der Ansprüche 1 bis 9, ferner umfassend einen Rheologiemodifizierer, insbesondere ausgewählt aus der Gruppe der Hydrokolloide, besonders bestimmt aus der Gruppe der Polysaccharide, Stärkederivate, Alginate, Guargummis und deren Derivate, Xanthangummis und deren Derivate, Carrageenangummis und deren Derivate, Succinoglycanen, Fliessmittel wie Polycarboxylate oder Melaminformaldehyde, Mineralkolloide, insbesondere Siliciumdioxid und Tonerden, und deren Gemische.

11. Zusammensetzung nach einem der Ansprüche 1 bis 10, ferner umfassend ein Hydrophobierungsmittel, ausgewählt aus der Gruppe der Fettsäuresalze wie Stearate und Oleate, Pflanzen- und Mineralöle, Silane, Siloxane und deren Gemische.

12. Zusammensetzung nach einem der Ansprüche 1 bis 11, ferner umfassend ein organisches Bindemittel, ausgewählt aus der Gruppe von Industrie-Latex wie zum Beispiel Latex auf Basis von Polyvinylacetat/Ethylen-, Polyvinylacetat/Versatat-, Styrol/Butadien-Copolymeren.

13. Verwendung einer Bindemittelzusammensetzung nach einem der Ansprüche 1 bis 12, in einer leichten Beschichtung, enthaltend Aggregate aus pflanzlicher oder biologischer Quelle, wie Holz oder Hanf.

14. Verwendung einer Bindemittelzusammensetzung nach einem der Ansprüche 1 bis 12, in einem Mörtel, enthaltend Aggregate aus pflanzlicher oder biologischer Quelle, wie Holz oder Hanf.

15. Verwendung einer Bindemittelzusammensetzung nach einem der Ansprüche 1 bis 12, in einem Beton, enthaltend Aggregate aus pflanzlicher oder biologischer Quelle, wie Holz oder Hanf.

16. Verwendung nach Ansprüchen 13 bis 15, wobei die Aggregate aus pflanzlicher oder biologischer Quelle eine Strohhalm-Form einer Länge von 5 bis 50 mm und einer Breite weniger als 10 mm aufweisen.

## Claims

1. Binder composition for mortars, concretes and light coatings with plant or bio-sourced aggregates, more particularly for hemp concrete, comprising a first conventional mineral component and powdered slaked lime, said binder composition having a specific surface area, calculated according to the BET method, greater than 10 m²/g, preferably greater than 12 m²/g, in particular greater than 14 m²/g,
**characterized in that** said powdered slaked lime has a specific surface area calculated according to the BET method greater than 22 m²/g, preferably greater than 25 m²/g and a total pore volume calculated according to the BJH method of nitrogen desorption greater than or equal to 0.08 cm³/g, preferably greater than or equal to 0.1 cm³/g and is present in a quantity strictly greater than 20 wt%, in particular equal to or greater than 25 wt%, preferably equal to or greater than 30 wt%, advantageously equal to or greater than 40 wt% and equal to or less than 80 wt%, in particular equal to or less than 60 wt%, relative to the total weight of said binder composition and **in that** said first conventional mineral component is a binder component selected from the group consisting of cements, natural or artificial hydraulic lime, clays, masonry binders, binders with pozzolanic and hydraulic setting, plaster and mixtures thereof.

2. Binder composition according to claim 1, in which the powdered slaked lime has a specific surface area calculated according to the BET method greater than 27 m²/g, preferably greater than 30 m²/g, preferably greater than 32 m²/g and in particular greater than 35 m²/g.

3. Binder composition according to claim 1 or claim 2, wherein said cements are selected from the group of common cements, in particular standardized, refractory cements, fused aluminous, prompt, portland cements, blast furnace slags, fly ash and mixtures thereof.

4. Binder composition according to any of claims 1 to 3, wherein the powdered slaked lime has particles having a d₃ greater than 0.1 µm, in particular greater than 0.5 µm and a d₉₈ less than or equal to 200 µm, in particular less than or equal to 150 µm.

5. Binder composition according to any of claims 1 to 4, wherein the powdered slaked lime has particles having a d₉₈ less than or equal to 90 µm, in particular less than or equal to 63 µm.

6. Binder composition according to any of claims 1 to 5, wherein the powdered slaked lime has a total pore volume calculated according to the BJH method of nitrogen desorption greater than or equal to 0.12 cm³/g, preferably greater than or equal to 0.15 cm³/g and especially greater than 0.18 cm³/g.

7. Binder composition according to any of claims 1 to 6, wherein the powdered slaked lime has a bulk density measured according to standard EN 459-2 ranging from 250 to 500 kg/m³.

8. Binder composition according to any of claims 1 to 7, further comprising an air entrainment agent such as a surfactant or surface active agent, in particular selected from the group of alkyl sulfates or sulfonates, ethoxylated fatty alcohols, block copolymers and mixtures thereof.

9. Binder composition according to any of claims 1 to 8, further comprising one or more water retention agents, e. g. cellulosic ethers or guar gums, their derivatives and mixtures thereof.

10. Binder composition according to any of claims 1 to 9, further comprising a rheology modifier, in particular selected from the group of hydrocolloids, more particularly from the group of polysaccharides, starch derivatives, alginates, guar gums and their derivatives, xanthan gums and their derivatives, caraghenan gums and their derivatives, succinoglycans, superplasticizers such as polycarboxylates or formaldehyde melamines, mineral colloids, in particular silica and clays, and mixtures thereof.

11. Composition according to any of claims 1 to 10, further comprising a hydrophobing agent selected from the group of salts of fatty acids such as stearates and oleates, vegetable and mineral oils, silanes, siloxanes and mixtures thereof.

12. Composition according to any of claims 1 to 11, further comprising an organic binder selected from the group of industrial latexes such as for example latexes based on copolymers of polyvinyl/ethylene acetate, polyvinyl/versatate acetate, styrol/butadiene.

13. Use of a binder composition according to any of claims 1 to 12 in a light coating containing vegetable or bio-sourced aggregates such as wood or hemp.

14. Use of a binder composition according to any of claims 1 to 12 in a mortar containing vegetable or bio-sourced aggregates such as wood or hemp.

15. Use of a binder composition according to any of claims 1 to 12 in a concrete containing vegetable or bio-sourced aggregates such as wood or hemp.

16. Use according to claims 13 to 15, wherein said vegetable or bio-sourced aggregates have a straw shape with a length of 5 - 50 mm and a width of less than 10 mm.
